Europäisches Patentamt

European Patent Office

Office européen des brevets

(11) Publication number: **0 370 614 B1**

# EUROPEAN PATENT SPECIFICATION

(45) Date of publication of patent specification: **06.04.94**   (51) Int. Cl.⁵: **G05B 13/04**

(21) Application number: **89310577.5**

(22) Date of filing: **16.10.89**

(54) **Process control systems.**

(30) Priority: **23.11.88 US 275813**

(43) Date of publication of application:
**30.05.90 Bulletin 90/22**

(45) Publication of the grant of the patent:
**06.04.94 Bulletin 94/14**

(84) Designated Contracting States:
**DE FR GB IT SE**

(56) References cited:

**REGELUNGSTECHNIK UND PROZESS-DATEN-
VERARBEITUNG vol. 20, no. 7, July 1972,MUN-
CHEN DE pages 301 - 304; A. AUER: "DIE
STÜCKWEISE LINEARE APPROXIMATION-
NICHTLINEARER REGELSTRECKEN MIT TOT-
ZEIT"**

**PATENT ABSTRACTS OF JAPAN vol. 11, no.
335 (P-632)(2782) 04 November 1987,& JP-
A-62 119601**

**PATENT ABSTRACTS OF JAPAN vol. 12, no.
359 (P-762)(3206) 27 September 1988;& JP-
A-63109503**

(73) Proprietor: **INTERNATIONAL CONTROL AUTO-
MATION FINANCE S.A.
16 Rue des Bains
Ville de Luxembourg(LU)**

(72) Inventor: **Buchner, Marc
24785 Pinshurst
Beachwood Ohio 44122(US)**
Inventor: **Loparo, Ken
12310 Caves Road
Chesterland Ohio 44026(US)**
Inventor: **Lane, John David
1950 Old Gallows Road
Suite 420
Vienna Virginia 22180(US)**
Inventor: **Scheib, Thomas Joseph
12865 Woodside Drive
Chesterland Ohio 44026(US)**

(74) Representative: **Pilch, Adam John Michael et
al
D. YOUNG & CO.,
21 New Fetter Lane
London EC4A 1DA (GB)**

ADVANCES IN INSTRUMENTATION. vol. 40, 1985, PITTSBURGH US& A.B.CORRIPIO: "SELF-TUNING CONTROL OF AN INDUSTRIAL CENTRIFUGAL COMPRESSOR"

## Description

This invention relates to process control systems. More particularly, but not exclusively, the invention relates to closed loop process control systems that utilise parameter estimation.

Industrial processes with large, unknown and/or time varying process delays are difficult to control. Self-tuning, in its present form, is typically inapplicable to processes of this class due to their reliance on recursive least squares parameter estimation and a proportional-integral-differential (PID) control algorithm. Recursive least squares parameter estimation techniques typically fail because of a requirement for explicit knowledge of the process deadtime. Similarly, control systems using a PID controller are unable directly to compensate for process deadtime. To maintain loop stability, these control systems must be detuned, thus degrading overall controller performance.

One approach for extending self-tuning control to the foregoing class of processes is to join a recursive least squares parameter estimation algorithm with a deadtime estimator and augment the control function with deadtime compensation. Two particular methods, one employing a bank of estimators with different assumed values for the deadtime, and the second employing a single estimator to identify a set of parameters extended over a time period so as to include an assumed deadtime, have received significant attention. Unfortunately, these techniques have proven impractical for general purpose application in an industrial setting.

By way of background, an example of a self-tuning process control system involving parameter estimation is described in Advances in Instrumentation, Volume 40, 1985, pages 643 to 654, and a method for determining the parameters of a model in a process control system is described in Regelungstechnik und Prozess-Datenverarbeitung, Volume 7, July 1972, pages 301 to 304.

According to one aspect of the invention there is provided a process control system comprising:

a controller for producing a control output for the process;

means for providing a first response, resulting from a comparison of a process variable and a setpoint, to a summation unit;

a model, connected to said controller and located in a feedback loop, for receiving said control output and providing an output to said summation unit; and

means, connected to said summation unit, for providing a second response to said controller;

wherein said controller and said model include algorithm means for updating said model based on estimated process parameters of observed process gain, lag time constant, and deadtime in response to changes in the setpoint, said algorithm means being operative numerically to calculate the values of the following control area integrals $I_1$ and $I_2$, for use in determining the estimated process parameters, as the control output approaches a new setpoint in accordance with the relationships:

$$I_1 = \frac{1}{\Delta SP} \int_0^\infty [m_{ss} - m(t)]dt$$

$$I_2 = \frac{1}{\Delta SP} \int_0^\infty [m_{ss} - m(t)]e^{-\alpha t}dt$$

where:

$m_{ss}$ = Final Value, Control Output
$m(t)$ = Control Output at time t
$\Delta SP$ = Change in setpoint
$\alpha$ = Weighting Parameter = $(\tau_m + T_m)^{-1}$
$\tau_m$ = Observed lag time constant
$T_m$ = Observed deadtime

According to another aspect of the invention there is provided a method for controlling a process, which has unknown or time varying deadtime, using a control system comprising a model of the process by measuring the response to a step setpoint change, the method comprising:

providing a first setpoint to the control system;

providing a process variable to the control system;

providing a first new setpoint to the control system to create a step setpoint change thereto and to start an estimation procedure which estimates process parameters based on an observed process output

3

response to said change;

calculating numerically the values of the following control area integrals $I_1$ and $I_2$ as the process output approaches the first new setpoint in accordance with the relationships:

$$I_1 = \frac{1}{\Delta SP} \int_0^\infty [m_{ss} - m(t)]dt$$

$$I_2 = \frac{1}{\Delta SP} \int_0^\infty [m_{ss} - m(t)]e^{-\alpha t}dt$$

where:

$m_{ss}$ = Final Value, Control Output

$m(t)$ = Control Output at time t

$\Delta SP$ = Change in setpoint

$\alpha$ = Weighting Parameter = $(\tau_m + T_m)^{-1}$

$\tau_m$ = Observed lag time constant

$T_m$ = Observed deadtime;

using said control area integrals to determine estimated process parameters of observed process gain, lag time constant and deadtime representative of the process; and

updating the process model using the estimated process parameters.

In the light of the foregoing disadvantages of the prior art, a preferred embodiment of the invention described below provides a self-tuning control technique and system that incorporates both a parameter estimation algorithm and an algorithm for deadtime estimation. The preferred embodiment can solve or at least alleviate the problems associated with the prior art by providing a control technique that can include both a recursive least squares parameter estimation algorithm and a deadtime estimation algorithm. The deadtime estimation algorithm uses time integrals of system variables responding to a step or impulse input. Proper selection of the integrals (control areas) results in a set of equations which are solvable for process parameters. The utilisation of control areas for parameter estimation permits identification of process deadtime. The smoothing effects of integration attenuates the effects of process noise on the parameter estimates.

The invention will now be further described, by way of illustrative and non-limiting example, with reference to the accompanying drawing, in which:

Figure 1 is a schematic diagram of a model-based controller; and

Figure 2 illustrates calculation of a time integral shown in Equation (2) below.

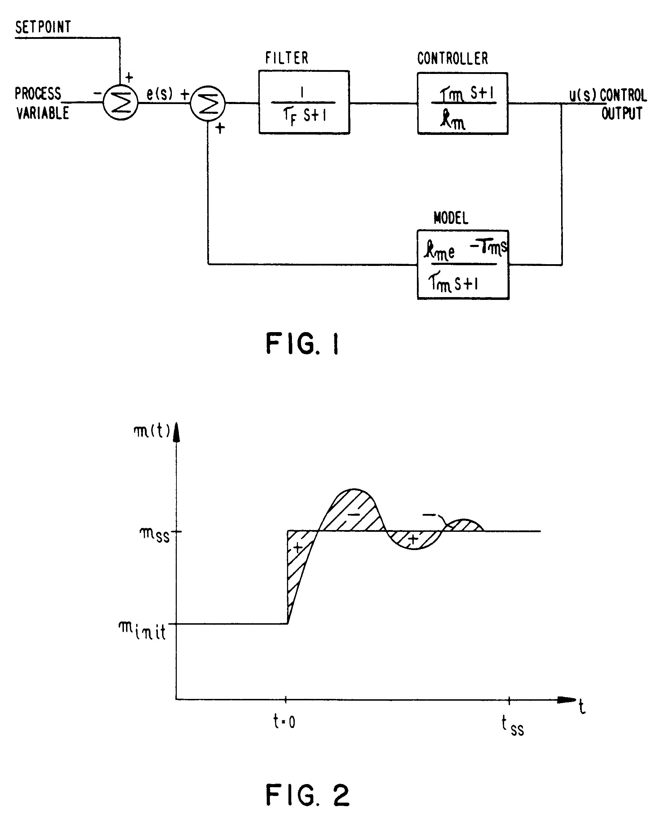

Figure 1 of the drawing is a schematic diagram of a model-based controller having the following transfer function:

$$\frac{U(s)}{e(s)} = \frac{1}{k_m} \left[ \frac{\dfrac{\tau_m S + 1}{\tau_f S + 1}}{1 - \dfrac{e^{-T_m S}}{\tau_f S + 1}} \right] \qquad (1)$$

where

$k_m, \tau_m, T_m, \tau_f$ = controller parameters (defined below);

$U(s)$ = a control output; and

$e(s)$ = the error between an input process variable and a setpoint.

This particular transfer function assumes that the controlled process can be approximated by a first order lag with deadtime. The controller is tuned in terms of the observed process gain $k_m$, lag time constant

$\tau_m$, and deadtime $T_m$. A fourth tuning parameter, a filter time constant $\tau_f$, specifies the desired time response of the process variable to a change in setpoint or to a disturbance.

The self-tuning control system couples a variable version of recursive least squares parameter estimation with the model-based controller. The derivation of the recursive least squares algorithm is well known in the art and is incorporated herein by reference. The use of this self-tuning control system is constrained to processes with a known and fixed process delay or to processes where the delay can be measured or inferred on-line. In order to extend the application of this system to processes with unknown or time varying deadtime, a parameter estimation technique is required. The technique described herein has the advantage of estimating all process parameters, including deadtime, in a closed loop system. The basic premise relative to this technique is that certain quantitative measurements of the system response to a step setpoint change can be directly related to the process parameters. Using various control areas involving the process output, a set of non-linear algebraic equations utilising the process parameters can be developed and solved.

The following steps describe the procedure used for estimating the deadtime and process parameters of a first order linear system using the controller shown in Figure 1:

a) The setpoint to the controller is increased or decreased by a prescribed amount to start the estimation procedure.

b) The integrals in Equations (2) and (3) shown below are calculated numerically as the response to the setpoint change. The values of both of these integrals converge as the process output approaches the new setpoint. Therefore, these integrals can be calculated over the finite time horizon from t = 0 to t = $t_{ss}$, as shown in Figure 2.

$$I_1 = \frac{1}{\Delta SP} \int_0^\infty [m_{ss} - m(t)]\, dt \qquad (2)$$

$$I_2 = \frac{1}{\Delta SP} \int_0^\infty [m_{ss} - m(t)]\, e^{-\alpha t}\, dt \qquad (3)$$

where:

$I_1$, $I_2$ = control area integrals;
$m_{ss}$ = final (steady state) value, control output;
$m(t)$ = control output at time t;
$\Delta SP$ = change in setpoint; and
$\alpha$ = weighting parameter = $(\tau_m + T_m)^{-1}$.

c) After observing the process response to a step setpoint change, Equations (4) to (6) shown below are used to estimate the process parameters.

$$k_{est} = \frac{\Delta SP}{m_{ss} - m_{init}} \qquad (4)$$

$$\tau_{est} = Z - \frac{1}{\alpha} \ln\left[\frac{a\tau_{est} - b}{c}\right] \qquad (5)$$

$T_{est} = Z - \tau_{est}$    (6)

where:

$k_{est}$, $\tau_{est}$, $T_{est}$ = estimated parameters;
$m_{init}$ = initial value, control output; and

$$Z = \frac{k_m}{k_{est}} \left( T_f + T_m \right) - k_{est} \, I_1$$

$$a = - \left[ \propto \left( T_f \propto + 1 + e^{-T_m \propto} \right) + \frac{k_{est} \propto \left( T_m \propto + 1 \right)}{k_m \left( k_{est} \, I_2 \propto - 1 \right)} \right]$$

$$b = -\frac{a}{\propto}$$

$$c = \frac{k_{est}}{k_m} \left( T_m + 1 \right)$$

From the foregoing, it is apparent that, by using time integrals of system variables reacting to a step or impulse change, a set of equations, solvable for process parameters, results. Furthermore, the use of control areas for parameter estimation permits identification of process deadtime. In addition, the smoothing effects of integration attenuate the effects of process noise on the resulting parameter estimates.

The foregoing deadtime/parameter estimator is designed to detect naturally occurring step setpoint changes and to estimate process parameters when they occur. The estimator continually calculates the average of the process variable over a fixed time horizon using a first order filter. When a setpoint change is detected, the estimator compares the average with the old setpoint to determine if the process was at steady state conditions. If so, the estimation algorithm is run. Should a second setpoint change occur before the estimation is completed, the estimation is aborted.

The user may also select to have the algorithm run on demand or on the occurrence of an event or be time dependent. With respect to these additional modes of operation, the user specifies the direction and magnitude of the setpoint change to be used for the test. Triggering the estimation algorithm results in the following sequence of events:

a) The estimator waits until it determines that the process is at steady state conditions.

b) The setpoint is changed to a specified amount by the user.

c) Parameters are estimated to characterise the process from observation of the closed loop response.

d) The setpoint is returned to its pre-test value.

e) A second set of parameters is estimated to characterise the response of the process moving in the opposite direction of the first test. The second test helps to identify overall process response so as to diminish effects caused by non-linearities.

f) The deadtime/parameter estimator outputs the average of the estimate obtained during the two tests.

The parameter estimates obtained in response to both natural and induced setpoint changes can be used to automatically update the model-based controller or can be presented to the operator for review and manual updating.

## Claims

1. A process control system comprising:

a controller for producing a control output for the process;

means for providing a first response, resulting from a comparison of a process variable and a setpoint, to a summation unit;

a model, connected to said controller and located in a feedback loop, for receiving said control output and providing an output to said summation unit; and

means, connected to said summation unit, for providing a second response to said controller;

wherein said controller and said model include algorithm means for updating said model based on estimated process parameters of observed process gain, lag time constant, and deadtime in response to changes in the setpoint, said algorithm means being operative numerically to calculate the values of the following control area integrals $I_1$ and $I_2$, for use in determining the estimated process parameters, as the control output approaches a new setpoint in accordance with the relationships:

$$I_1 = \frac{1}{\Delta SP} \int_0^\infty [m_{ss} - m(t)]dt$$

$$I_2 = \frac{1}{\Delta SP} \int_0^\infty [m_{ss} - m(t)]e^{-\alpha t}dt$$

where:

$m_{ss}$ = Final Value, Control Output
$m(t)$ = Control Output at time t
$\Delta SP$ = Change in setpoint
$\alpha$ = Weighting Parameter = $(\tau_m + T_m)^{-1}$
$\tau_m$ = Observed lag time constant
$T_m$ = Observed deadtime

2. A method for controlling a process, which has unknown or time varying deadtime, using a control system comprising a model of the process by measuring the response to a step setpoint change, the method comprising:

providing a first setpoint to the control system;

providing a process variable to the control system;

providing a first new setpoint to the control system to create a step setpoint change thereto and to start an estimation procedure which estimates process parameters based on an observed process output response to said change;

calculating numerically the values of the following control area integrals $I_1$ and $I_2$ as the process output approaches the first new setpoint in accordance with the relationships:

$$I_1 = \frac{1}{\Delta SP} \int_0^\infty [m_{ss} - m(t)]dt$$

$$I_2 = \frac{1}{\Delta SP} \int_0^\infty [m_{ss} - m(t)]e^{-\alpha t}dt$$

where:

$m_{ss}$ = Final Value, Control Output
$m(t)$ = Control Output at time t
$\Delta SP$ = Change in setpoint
$\alpha$ = Weighting Parameter = $(\tau_m + T_m)^{-1}$
$\tau_m$ = Observed lag time constant
$T_m$ = Observed deadtime;

using said control area integrals to determine estimated process parameters of observed process gain, lag time constant and deadtime representative of the process; and

updating the process model using the estimated process parameters.

3. A method as claimed in claim 2, including solving a set of three non-linear algebraic equations which relate to the process gain, lag time constant and deadtime respectively as follows

$$k_{est} = \frac{\Delta SP}{m_{ss} - m_{init}}$$

$$\tau_{est} = Z \frac{1}{\alpha} \ln \left[ \frac{a\ \tau_{est}\ -\ b}{c} \right]$$

$$T_{est} = Z - \tau_{est}$$

where:

$k_{est}, \tau_{est}, T_{est}$ = Estimated parameters

$m_{init}$ = Initial value, Control Output

and:

$$Z = \frac{k_m}{k_{est}} (\tau_f + \tau_m) - k_{est} I_1$$

$$\alpha = -\left[ \alpha(\tau_f\ \alpha\ +\ 1\ +\ e^{-Tm\alpha}) + \frac{k_{est}\ \alpha(\tau_m\ \alpha\ +\ 1)}{k_m\ (k_{est}\ I_2\ \alpha\ -1)} \right]$$

$$b = -\frac{a}{\alpha}$$

$$c = \frac{k_{est}}{k_m} (\tau_m\ +\ 1)$$

where:

$k_m$ = Observed process gain

$\tau_f$ = Filter time constant

to determine the estimated process deadtime, process gain and lag time for updating the process model.

4. A method as claimed in claim 3, including the steps of continually calculating an average of the process variable over a fixed time horizon using a first order filter, and starting the estimating procedure only if a comparison of the average with the first setpoint determines that the process was at steady state conditions.

5. A method as claimed in claim 4, including the step of aborting the estimation procedure if another setpoint change occurs before the estimation procedure is completed.

6. A method as claimed in claim 3, including the step of provided a second new setpoint to the controller to create a setpoint change thereto in an opposite direction with respect to the change created by said first new setpoint, thereby to characterize the overall response of the process and diminish effects caused by non-linearities.

**Patentansprüche**

1. Prozeßregelungseinrichtung mit:

einem Regler zur Erzeugung eines Regelungsausgangssignals für den Prozeß;

Einrichtungen zur Bereitstellung einer ersten, aus einem Vergleich einer Prozeßvariablen mit einem Sollwert herrührenden, Antwort für eine Aufsummierungseinheit;

einem Modell bzw. Modellregelkreis, das bzw. der mit dem Regler verbunden und in einer Rückkoppungsschleife angebracht ist und das bzw. der das Reglerausgangssignal aufnimmt und ein Ausgangssignal an die Aufsummierungseinheit liefert; und

Einrichtungen , die mit der Aufsummierungseinheit verbunden sind und ein zweites Antwortsignal an den Regler liefern;

wobei der Regler und der Modellregelkreis Algorithmus- bzw. Berechnungseinrichtungen enthalten, die auf der Grundlage von geschätzten Prozeßparametern von beobachtetem Prozeßverstärkungsfaktor, Zeitverzögerungskonstante und Totzeit in Antwort auf Sollwertänderungen den Modellregelkreis auf den neuesten Stand bringen, wobei die Berechnungseinrichtungen dahingehend wirken, zur Verwendung in der Bestimmung der geschätzten Prozeßparameter numerisch die Werte der folgenden Regelungsbereichsintegrale I1 und I2 zu berechnen, wenn das Regelungsausgangssignal sich einem neuen Sollwert nähert, wobei folgende Beziehungen gelten:

$$I_1 = \frac{1}{\Delta SP} \int_0^\infty [m_{ss} - m(t)]dt$$

$$I_2 = \frac{1}{\Delta SP} \int_0^\infty [m_{ss} - m(t)]e^{-\alpha t}dt$$

wobei:

$m_{ss}$ = Endwert, Reglerausgangssignal

$m(t)$ = Reglerausgangssignal zur Zeit t

$\Delta SP$ = Änderung des Sollwerts

$\alpha$ = Wichtungsparameter = $(\tau_m + T_m)^{-1}$.

$\tau_m$ = beobachtete Verzögerungszeitkonstante

$T_m$ = beobachtete Totzeit.

2.  Verfahren zur Regelung eines Prozesses, der eine unbekannte oder zeitlich veränderliche Totzeit hat, unter Verwendung eines Regelungssystems mit einem Prozeßmodellregelkreis, indem die Antwort auf eine stufenförmige Sollwertänderung gemessen wird; wobei das Verfahren aufweist:

Bereitstellung eines ersten Sollwerts für das Regelungssystem;

Bereitstellung einer Prozeßvariablen für das Regelungssystem;

Bereitstellung eines ersten neuen Sollwerts für das Regelungssystem zur Erzeugung einer stufenförmigen Sollwertveränderung darin und um ein Abschätzverfahren zu auszulösen, welches auf der Grundlage einer beobachteten Prozeßausgangsantwort auf diese Änderung Prozeßparameter schätzt;

numerische Berechnung der Werte folgender Regelungsbereichsintegrale $I_1$ und $I_2$ während das Prozeßausgangssignal sich dem ersten neuen Sollwert nähert gemäß

folgenden Beziehungen:

$$I_1 = \frac{1}{\Delta SP} \int_0^\infty [m_{ss} - m(t)]dt$$

$$I_2 = \frac{1}{\Delta SP} \int_0^\infty [m_{ss} - m(t)]e^{-\alpha t}dt$$

wobei:

$m_{ss}$ = Endwert, Reglerausgangssignal

$mi(t)$ = Reglerausgangssignal zur Zeit t

$\Delta SP$ = Änderung des Sollwerts

$\alpha$ = Wichtungsparameter = $(\tau_m + T_m)^{-1}$.

$\tau_m$ = beobachtete Verzögerungszeitkonstante

$T_m$ = beobachtete Totzeit.

wobei die Regelungsbereichsintegrale verwendet werden, um die geschätzten Prozeßparameter des beobachteten Prozeßverstärkungsfaktors, Zeitverzögerungskonstante und Totzeit, die für den Prozeß repräsentativ sind, zu bestimmen; und

die Neufestsetzung der Prozeßmodellregelkreiswerte unter Verwendung der geschätzten Prozeßparameter.

3. Ein Verfahren nach Anspruch 2 einschließlich der Lösung eines Satzes dreier nichtlinearer algebraischer Gleichungen, die sich auf den Prozeßverstärkungsfaktor, die Verzögerungszeitkonstante bzw. auf die Totzeit wie folgt beziehen

$$k_{est} = \frac{\Delta SP}{m_{ss} - m_{init}}$$

$$\tau_{est} = \tau_{est} = Z \frac{1}{\alpha} \ln \left[ \frac{a \ \tau_{est} \ - \ b}{c} \right]$$

$$T_{est} = Z - \tau_{est}$$

wobei:

$k_{est}$, $\tau_{est}$, $T_{est}$ = geschätzte Parameter;

$m_{init}$ = Anfangswert, Reglerausgangssignal;

und

$$Z = \frac{k_m}{k_{est}} (\tau_f + \tau_m) - k_{est} I_1$$

$$\alpha = - \left[ \alpha(\tau_f \ \alpha \ + \ 1 \ + \ e^{-Tm\alpha}) \ + \ \frac{k_{est} \ \alpha(\tau_m \ \alpha \ + \ 1)}{k_m \ (k_{est} \ I_2 \ \alpha \ -1)} \right]$$

$$b = -\frac{a}{\alpha}$$

$$c = \frac{k_{est}}{k_m} (\tau_m + 1)$$

wobei:

$k_m$ = beobachteter Prozeßverstärkungsfaktor

$\tau_f$ = Filterzeitkonstante zur Bestimmung der geschätzten Prozeßtotzeit, des Prozeßverstärkungsfaktors und der Verzögerungszeit, um den Prozeßmodellregelkreis auf den neuesten Stand zu bringen.

4. Verfahren nach Anspruch 3 einschließlich der Schritte, einen Mittelwert der Prozeßvariablen über ein festes Zeitintervall unter Benutzung eines Filters erster Ordnung kontinuierlich zu berechnen und das Schätzverfahren nur zu beginnen, wenn ein Vergleich des Mittelwerts mit dem ersten Sollwert ergibt, daß der Prozeß im stabilen bzw. eingeschwungenen Zustand war.

5. Verfahren nach Anspruch 4 einschließlich des Schrittes, das Schätzverfahren abzubrechen, wenn eine weitere Sollwertänderung erfolgt, bevor das Schätzverfahren abgeschlossen ist.

**6.** Verfahren nach Anspruch 3 einschließlich des Schrittes, einen zweiten neuen Sollwert an den Regler zu geben, um darin eine Sollwertänderung in einer bezüglich der durch den ersten neuen Sollwert erzeugten Änderung entgegengesetzten Richtung zu erzeugen, um so die Gesamtantwort des Prozesses zu identifizieren und von Nichtlinearitäten verursachte Effekte zu vermindern.

**Revendications**

**1.** Système de commande de processus comprenant :

un régulateur pour produire une sortie de commande pour le processus ;

un moyen pour fournir, à une unité de sommation, une première réponse résultant d'une comparaison d'une variable de processus et d'un point de consigne ;

un modèle, relié audit régulateur et situé dans une boucle de contre-réaction, pour recevoir ladite sortie de commande et pour fournir une sortie à ladite unité de sommation ; et,

un moyen, connecté à ladite unité de sommation, pour fournir, audit régulateur, une seconde réponse ;

dans lequel ledit régulateur et ledit modèle comprennent un moyen formant algorithme pour mettre à jour ledit modèle en se basant sur des paramètres de processus estimés, de gain de processus observé, de constante de temps en retard, et de temps de récupération en réponse aux variations du point de consigne, ledit moyen formant algorithme servant à calculer de manière numérique les valeurs des intégrales de surface de commande $I_1$ et $I_2$ suivantes, pour utilisation à la détermination des paramètres de processus estimés, lorsque la sortie de commande approche d'un nouveau point de consigne, d'après les relations :

$$I_1 = \frac{1}{\Delta SP} \int_0^\infty [m_{ss} - m(t)]dt$$

$$I_2 = \frac{1}{\Delta SP} \int_0^\infty [m_{ss} - m(t)]e^{-\alpha t}dt$$

où

$m_{ss}$ est la valeur finale de la sortie de commande ;

$m(t)$ est la sortie de commande à l'instant t ;

$\Delta SP$ est la variation du point de consigne ;

$\alpha$ est le paramètre de pondération = $(\tau_m + T_m)^{-1}$ ;

$\tau_m$ est la constante de temps de retard observée ;

$T_m$ est le temps de récupération observé.

**2.** Procédé pour commander un processus, qui a un temps de récupération inconnu ou variable dans le temps, utilisant un système de commande comprenant un modèle du processus, en mesurant la réponse à une variation par pas du point de consigne, le procédé comprenant :

la fourniture d'un premier point de consigne au système de commande ;

la fourniture d'une variable de processus au système de commande ;

la fourniture d'un premier nouveau point de consigne au système de commande pour y créer une variation de point de consigne par pas et pour démarrer une procédure d'estimation qui estime les paramètres de processus en se basant sur une réponse de sortie de processus observée à ladite variation ;

le calcul numérique des valeurs des intégrales de surface de commande $I_1$ et $I_2$ suivantes, lorsque la sortie de processus approche le premier nouveau point de consigne, d'après les relations :

$$I_1 = \frac{1}{\Delta SP} \int_0^\infty [m_{ss} - m(t)]dt$$

$$I_2 = \frac{1}{\Delta SP} \int_0^\infty [m_{ss} - m(t)]e^{-\alpha t}dt$$

où

$m_{ss}$ est la valeur finale de la sortie de commande ;

$m(t)$ est la sortie de commande à l'instant t ;

$\Delta SP$ est la variation du point de consigne ;

$\alpha$ est le paramètre de pondération = $(\tau_m + T_m)^{-1}$ ;

$\tau_m$ est la constante de temps de retard observée ;

$T_m$ est le temps de récupération observé.

l'utilisation desdites intégrales de surface de commande pour déterminer les paramètres de processus estimés, de gain de processus observé, de constante de temps de retard et de temps de récupération représentatifs du processus ; et,

la mise à jour du modèle de processus en utilisant les paramètres de processus estimés.

3. Procédé selon la revendication 2, incluant la résolution d'un ensemble de trois équations algébriques non linéaires qui se rapportent, respectivement, au gain de processus, à la constante de temps de retard et au temps de récupération, comme suit :

$$k_{est} = \frac{\Delta SP}{m_{ss} - m_{init}} \qquad (4)$$

$$\tau_{est} = Z \frac{1}{\alpha} \ln \left[ \frac{a\tau_{est} - b}{c} \right] \qquad (5)$$

$$T_{est} = Z - \tau_{est} \qquad (6)$$

où :

$k_{est}$, $\tau_{est}$, $T_{est}$ sont les paramètres estimés ;

$m_{init}$ est la sortie de commande pour la valeur initiale ; et :

$$Z = \frac{k_m}{k_{est}} (\tau_f + \tau_m) - k_{est} I,$$

$$a = - \left[ \alpha (\tau_f \alpha + 1 + e^{-T_m\alpha}) + \frac{k_{est} \alpha (\tau_m\alpha+1)}{k_m (k_{est}I_2\alpha-1)} \right]$$

$$b = -\frac{a}{\alpha}$$

12

$$c = \frac{k_{est}}{k_m} \quad (\tau_m + 1)$$

où :

$k_m$ est le gain de processus observé

$\tau_f$ est la constante de temps de filtre

pour déterminer le temps de récupération de processus, le gain de processus et le temps de retard estimés pour mettre à jour le modèle de processus.

4. Procédé selon la revendication 3, incluant les étapes consistant à calculer en continu une moyenne de la variable de processus sur un horizon temporel fixe en utilisant un filtre du premier ordre et en démarrant la procédure d'estimation seulement si la comparaison de la moyenne avec le premier point de consigne détermine que le processus était dans des conditions de régime permanent.

5. Procédé selon la revendication 4, incluant l'étape constituant à abandonner la procédure d'estimation si une autre variation de point de consigne se produit avant que la procédure d'estimation soit terminée.

6. Procédé selon la revendication 3, comprenant l'étape consistant à fournir un second nouveau point de consigne au régulateur pour y créer une variation de point de consigne dans le sens contraire par rapport à la variation créée par ledit premier nouveau point de consigne, pour caractériser par ce moyen la réponse globale du processus et pour diminuer les effets provoqués par les non-linéarités.

FIG. 1

FIG. 2